## Europäisches Patentamt

## European Patent Office

## Office européen des brevets

(19)

(11) Veröffentlichungsnummer: **0 185 214**

**A1**

(12) # EUROPÄISCHE PATENTANMELDUNG

(21) Anmeldenummer: **85114793.4**

(22) Anmeldetag: **21.11.85**

(51) Int. Cl.⁴: **C 09 K 3/18**

(30) Priorität: **18.12.84 DE 3446109**

(43) Veröffentlichungstag der Anmeldung:
**25.06.86 Patentblatt 86/26**

(84) Benannte Vertragsstaaten:
**AT CH DE FR GB IT LI**

(71) Anmelder: **Teroson GmbH**
**Hans-Bunte-Strasse 4**
**D-6900 Heidelberg 1(DE)**

(72) Erfinder: **Tomaschek, Heinz, Dr.**
**Waldshuter Weg 4**
**D-6900 Heidelberg(DE)**

(72) Erfinder: **Bolzoni, Luigi**
**Via Carozzi 4**
**Mailand(IT)**

(74) Vertreter: **UEXKÜLL & STOLBERG Patentanwälte**
**Beselerstrasse 4**
**D-2000 Hamburg 52(DE)**

(54) **Verfahren zum Isolieren von Bauwerken gegen Feuchtigkeit sowie Dichtmittel zur Durchführung des Verfahrens.**

(57) Zum Isolieren von Bauwerken gegen Feuchtigkeit wird in einer Schichtdicke von etwa 0,5 bis 3 mm ein feuchtigkeitshärtendes flüssiges Dichtmittel aufgesprüht, welches als Beindemittel ein Polyurethanpräpolymer mit Isocyanat- oder verkappten Isocyanat-Endgruppen, als Härter ein Enamin oder Dienamin sowie Weichmacher, Füllstoffe, Fasern und ggf. ein Lösungsmittel enthält. Die Viskosität des Dichtmittels beträgt etwa 5.000 bis 25.000 mPa.sec.

## Verfahren zum Isolieren von Bauwerken gegen Feuchtigkeit sowie Dichtmittel zur Durchführung des Verfahrens

Bauwerke müssen gegen Feuchtigkeit bzw. eindringendes Wasser isoliert werden. Besonders offensichtlich ist dies bei Dächern von Gebäuden; dasselbe gilt aber auch für Hoch- und Tiefbau-Fundamente sowie Brücken und Straßenbauten. Man verwendet heute überwiegend Materialien auf Teer- oder Bitumenbasis, welche entweder flüssig oder in Form von Bahnen (Dachpappe, bitumenbeschichtete Kunststoff-Folien etc.) aufgebracht werden.

Besonders schwierig ist es, undicht gewordene Gebäudeflächen, insbesondere Flachdächer von Wohn- oder Industriegebäuden oder Parkhäusern bei auftretenden Undichtigkeiten nachträglich wieder zu isolieren und dadurch das Gebäude zu sanieren. Dasselbe gilt für Fundamente von Gebäuden und Brücken.

Der Erfindung liegt die Aufgabe zugrunde, Bauwerke gegen Feuchtigkeit bzw. eindringendes Wasser mit Hilfe eines Dichtmittels auf Kunststoffbasis in möglichst einfacher Weise zu isolieren.

Es wurde überraschend gefunden, daß dies dadurch gelingt, daß man auf die zu isolierenden grob gereinigten, ggf. noch feuchten Flächen in einer Schichtdicke von nur etwa 0,5 bis 3 mm ein feuchtigkeitshärtendes flüssiges Dichtmittel aufsprüht, welches als Bindemittel ein Polyurethanpräpolymer mit Isocyanat- oder verkappten Isocyanat-Endgruppen, als Härter ein Enamin oder Dienamin sowie Weichmacher, Füllstoffe, anorganische und/oder organische Fasern sowie ggf. ein Lösungsmittel in einer solchen Menge enthält, daß die Viskosität des Dichtmittels etwa 5.000 bis 25.000 mPa.sec. (gemessen im Brookfield-Viskosimeter RVT mit Spindel 7 bei 50U/min.) beträgt. Es wurde gefunden, daß man mit Hilfe dieses Verfahrens Sanierungsarbeiten in besonders einfacher Weise durchführen kann, auch wenn die zu behandelnden Flächen uneben sind oder eine unregelmäßige Form mit Hinterschneidungen und dergleichen aufweisen. Man erhält eine dünne, lose haftende Schicht, die in wenigen Stunden durchhärtet und hervorragende mechanische Eigenschaften zeigt. Insbesondere besitzen die Beschichtungen eine hohe Festigkeit und Elastizität, einen hervorragenden Durchstechungswiderstand und sehr gute Lichtstabilität.

Die Dichtmittel werden hinsichtlich ihrer Viskosität so eingestellt, daß sie sich blasenfrei aufsprühen lassen, insbesondere auch mit den üblichen luftunterstützten Spritzgeräten, obwohl selbstverständlich auch ein luftfreies Aufbringen möglich ist. Durch den erfindungsgemäßen Zusatz spezieller Thixotropierungsmittel wird erreicht, daß die Dichtmittel trotz ihrer Spritzbarkeit eine gute Standfestigkeit auf vertikalen Flächen besitzen, von diesen also unmittelbar nach der Aufbringung nicht ablaufen.

Als Polyurethanpräpolymere finden aromatische Polyisocyanate, z.B. 2,4- und 2,6-Diisocyanato-toluol, 4,4'-Diisocyanato-diphenylmethan, 1,5-Naphthylen-diisocyanat, verkappte aromatische Polyisocyanate, z.B. ein durch ein Phenol verkapptes Diisocyanato-toluol, ein durch ein Phenol verkapptes Triisocyanat aus der Umsetzung von Trimethylol-propan mit Diisocyanato-toluol, aliphatische Diisocyanate, z.B. Hexamethylen-diisocyanat, Trimethyl-hexamethylen-diisocyanat, Dimeryl-diisocyanat (Dimeryl = Rest einer dimerisierten Fettsäure), cyclo-aliphatische Diisocyanate, z.B. Dicyclohexylmethan-diisocyanat, Isophoron-diisocyanat ( = 1-Isocyanato-3-isocyanatomethyl-3,5,5-trimethyl-cyclohexan), biuretgruppenhaltige Triisocyanate, Umsetzungsprodukte aus Polyolen, z.B. niedermolekularen aliphatischen Polyolen oder Polybutadiendiolen mit Polyisocyanaten, und präpolymere Isocyanate, die durch Reaktion von überschüssigem Diisocyanat mit Polyestern oder Polyethern hergestellt werden. Bei Bedarf werden die Isocyanate, speziell die aromatischen, in verkappter Form eingesetzt. Zum Verkappen eignen sich Phenole, z.B. Phenol und Nonyl-phenol, und Maleinsäureester.

Die als Härter eingesetzten Enamine und Dienamine sind aus den DE-OS 21 16 882 und DE-OS 25 21 841 bekannt. Sie werden durch Umsetzung von Aminen mit Aldehyden oder Ketonen erhalten, wobei die Dienamine von Diaminen abgeleitet sind. Ein bevorzugtes Dienamin wird aus einem ggf. alkylsubstituierten Cyclohexanon und dem Diamin aus dimerisierter Fettsäure und 2 Mol Piperazin erhalten. Günstig sind auch Monoenamine, welche noch eine weitere funktionelle Gruppe aufweisen, z.B. eine Hydroxylgruppe. Ein besonders wertvolles Enamin dieses Typs ist das Kondensationsprodukt von Isobutyraldehyd mit N-Hydroxyethylpiperazin. Zahlreiche weitere geeignete Härter finden sich in der DE-OS 21 16 882, auf die ausdrücklich verwiesen wird.

Als Weichmacher werden dem Dichtmittel vorzugsweise solche zugesetzt, welche flammhemmend wirken. Beispiele sind Chlorparaffine (Cerechlor) und Tris-(monochlorisopropyl)phosphat. Antimontrioxid als Co-Katalysator fördert den Zerfall der Chlorverbindungen und erhöht dadurch deren flammhemmende Wirkung.

Ferner enthalten die Dichtmittel geeignete Füllstoffe wie Kreide, Ruß, Kieselsäure und andere. Um die Spritzbarkeit des Dichtmittels nicht zu beeinträchtigen, dürfen jedoch keine zu hohen Mengen an verdickend wirkenden Pigmenten bzw. Füllstoffen zugesetzt werden. Unter Umständen werden kleine Mengen eines Netzmittels zugegeben.

Als Thixotropierungsmittel finden anorganische und/oder organische Fasern, z.B. aus Glas, Polyvinylchlorid, Polyester oder Polyamid Verwendung. Besonders bevorzugt sind Polyethylenfasern, welche vorzugsweise eine durchschnittliche Länge von 0,2 mm und einen durchschnittlichen Durchmesser von etwa 6 μm aufweisen. Dieser Zusatz verleiht den Dichtmitteln die notwendige Standfestigkeit auch an vertikalen Flächen, ohne gleichzeitig die Spritzbarkeit zu gefährden. Ein Zusatz geringer Mengen einer Base wie Calciumoxid kann günstig sein.

Zur Einstellung der Viskosität des Dichtmittels findet ein Lösungsmittel, vorzugsweise auf Basis aliphatischer Kohlenwasserstoffe (z. B. Isopar H) Verwendung. Dieses Lösungsmittel verdampft teilweise beim Aufsprühen, so daß nur der eigentliche Überzug zurückbleibt, welcher ohne merkliche Schrumpfung rasch härtet. Der niedrig siegende Anteil des Lösungsmittels hat einen Siedepunkt unter 100°C, der höher siedende einen Siedepunkt bis zu 250°C.

Vorzugsweise wird dem Dichtmittel ein UV-Stabilisator zugesetzt, da das aufgesprühte Mittel ständig dem Sonnenlicht ausgesetzt ist, beispielsweise bei der Anwendung zur Sanierung undichter Dachflächen. Ein besonders bevorzugtes Stabilisierungsmittel ist Nickeldithiocarbamat. Die erfindungsgemäß verwendeten Bindemittel zeichnen sich durch besonders hohe UV-Stabilität aus.

Eine wesentliche Verbesserung bestimmter Eigenschaften läßt sich erreichen, wenn man dem Dichtmittel Teer in einer Menge bis zu 45 Gew.%, vorzugsweise etwa 10 bis 45 Gew.% und insbesondere etwa 10 bis 20 Gew.% zusetzt. Man erreicht dadurch nicht nur eine wesentliche Verbilligung des Dichtmittel, sondern erhält darüber hinaus auch eine deutliche Erhöhung der Flexibilität und der UV-Stabilität.

Die einzelnen Bestandteile sind in dem Dichtmittel in den folgenden Anteilen (jeweils bezogen auf das gesamte Dicht- mittel) enthalten:

| Bestandteil | Prozentbereich (Gew.%) |
|---|---|
| Polyurethanpräpolymer | 20 - 50 |
| Enamin | 10 - 20 |
| Füllstoffe | 10 - 35 |
| Weichmacher | 20 - 35 |
| Fasern | 0,5 - 5 |
| Flammschutzmittel | 0,5 - 6 |
| Calciumoxid | 1 - 5 |
| UV-Stabilisator | 0,1 - 5 |
| Lösungsmittel | etwa 3 - 20 (abhängig von der Viskosität) |

Gegenstand der Erfindung ist nicht nur das Verfahren zum Isolieren von Bauwerken, sondern auch das zur Durchführung dieses Verfahrens erforderliche Dichtmittel.

Zur näheren Erläuterung der Erfindung soll das nachfolgende Beispiel für eine besonders bevorzugte Zusammensetzung des Dichtmittels dienen.

Beispiel

Ein sprühbares Dichtmittel zur Sanierung von undichten Dachflächen wurde aus folgenden Bestandteilen hergestellt:

30 Gew.% Isophorondiisocyanat-Präpolymer
10 Gew.% Dienamin (Trimethylcyclohexanon Piperazin/Dimersäure)
10 Gew.% Ruß

15,4 Gew.% gefällte Kreide (50 mµ bis 5 µm)

17 Gew.% Tris-(monochlorisopropyl)phosphat

8 Gew.% Chlorparaffin (Cerechlor)

0,1 Gew.% Netzmittel

1,0 Gew.% Polyethylenfasern (0,2 mm, 6 µm)

2,0 Gew.% Calciumoxid

0,5 Gew.% Nickeldithiocarbamat

6,0 Gew.% aliphatisches Lösungsmittel (Isopar H)

Das Dichtmittel zeigte nach dem Aufsprühen eine Hautbildung innerhalb von 10 bis 15 Minuten; die Härtungsgeschwindigkeit betrug 2 mm je Tag, so daß eine 1 mm dicke Schicht, welche in der Regel bereits ausreicht, innerhalb von etwa 12 Stunden durchhärtet. Der Sauerstoffindex lag bei 23,2 (ASTM 2863). Auch die Flammfestigkeit gemäß DIN 4102 war ausgezeichnet.

Der Test nach DIN 53507 ergab folgende Ergebnisse:

| | $F_{100}(N/cm^2)$ (Modul b. 100% Dehnung) | $F_B(N/cm^2)$ (Bruchlast) | $D_B(\%)$ (Dehnung) |
|---|---|---|---|
| Nach 7 Tagen, RT | 50 | 330 | 510 |
| Nach 600 h, 80°C | 50 | 440 | 540 |
| Nach 600 h, 70°C, 100% RLF | 40 | 270 | 530 |
| Nach Bewitterung, 600 h | 50 | 390 | 660 |
| Nach 600 h, QUV | 50 | 360 | 590 |

Die vorstehenden Ergebnisse zeigen die hervorragenden Eigenschaften des erfindungsgemäßen Dichtmittels. Es ist praktisch vollständig hitze- und lichtstabil und zeigt eine Dehnung von 500 bis 600%, so daß auch unter extremen Bedingungen ein Reißen der durch Aufspritzen hergestellten Schutzschicht nicht eintreten kann. Die Schrumpfung nach Bewitterung im Freien betrug nach 30 Tagen nur 3%.

ugs/Lsch

Patentansprüche

1. Verfahren zum Isolieren von Bauwerken gegen Feuchtigkeit mit Hilfe eines Einkomponenten-Polyurethandichtmittels, dadurch gekennzeichnet, daß man in einer Schichtdicke von etwa 0,5 bis 3 mm auf die zu isolierenden grob gereinigten, ggf. noch feuchten Flächen ein feuchtigkeitshärtendes flüssiges Dichtmittel aufsprüht, welches als Bindemittel ein Polyurethanpräpolymer mit Isocyanat- oder verkappten Isocyanat-Endgruppen, als Härter ein Enamin oder Dienamin sowie Weichmacher, Füllstoffe, anorganische und/oder organische Fasern sowie ggf. ein Lösungsmittel in einer solchen Menge enthält, daß die Viskosität des Dichtmittels etwa 5.000 bis 25.000 mPa.sec. (gemessen im Brookfield-Viskosimeter RVT mit Spindel 7 bei 50 U/min). beträgt.

2. Verfahren nach Anspruch 1, dadurch gekennzeichnet, daß man ein Dichtmittel verwendet, das Polyethylenfasern mit einer durchschnittlichen Länge von 0,2 mm und einem durchschnittlichen Durchmesser von 6 μm enthält.

3. Verfahren nach einem der Ansprüche 1 oder 2, dadurch gekennzeichnet, daß man ein Dichtmittel verwendet, das flammhemmende Weichmacher enthält.

4. Verfahren nach einem der Ansprüche 1 bis 3, dadurch gekennzeichnet, daß man ein Dichtmittel verwendet, welches zusätzlich ein Flammschutzmittel enthält.

5. Verfahren nach Anspruch 4, dadurch gekennzeichnet, daß man als Flammschutzmittel Antimontrioxid verwendet.

6. Verfahren nach einem der Ansprüche 1 bis 5, dadurch gekennzeichnet, daß man ein Dichtmittel verwendet, das einen UV-Stabilisator enthält.

7. Verfahren nach einem der Ansprüche 1 bis 6, dadurch gekennzeichnet, daß man ein Dichtmittel verwendet, das eine geringe Menge einer Base enthält.

8. Verfahren nach einem der Ansprüche 1 bis 7, dadurch gekennzeichnet, daß man ein Dichtmittel verwendet, das als Lösungsmittel ein Gemisch aus niedrig siedenden und höher siedenden Anteilen enthält.

9. Verfahren nach einem der Ansprüche 1 bis 8, dadurch gekennzeichnet, daß man ein Dichtmittel verwendet, das zusätzlich 10 bis 45 Gew.% Teer enthält.

10. Verfahren nach einem der Ansprüche 1 bis 9, dadurch gekennzeichnet, daß man das Dichtmittel mit Luft aufsprüht.

11. Dichtmittel zur Durchführung des Verfahrens der Ansprüche 1 bis 10, dadurch gekennzeichnet, daß es als Bindemittel ein Polyurethanpräpolymer mit Isocyanat- oder verkappten Isocyanat-Endgruppen, als Härter ein Enamin oder Dienamin sowie Weichmacher, Füllstoffe, anorganische und/oder organische Fasern sowie ggf. ein Lösungsmittel in einer solchen Menge enthält, daß die Viskosität des Dichtmittels etwa 5.000 bis 25.000 mPa.sec. (gemessen im Brookfield-Viskosimeter RVT mit Spindel 7 bei 50 U/min) beträgt.

12. Dichtmittel nach Anspruch 11, dadurch gekennzeichnet, daß es Polyethylenfasern mit einer durchschnittlichen Länge von 0,2 mm und einem durchschnittlichen Durchmesser von 6 µm enthält.

13. Dichtmittel nach Anspruch 11 oder 12, dadurch gekennzeichnet, daß es flammhemmende Weichmacher enthält.

14. Dichtmittel nach einem der Ansprüche 11 bis 13, dadurch gekennzeichnet, daß es zusätzlich ein Flammschutzmittel enthält.

15. Dichtmittel nach Anspruch 14, dadurch gekennzeichnet, daß es Antimontrioxid enthält

16. Dichtmittel nach einem der Ansprüche 11 bis 15, dadurch gekennzeichnet, daß es einen UV-Stabilisator enthält.

17. Dichtmittel nach einem der Ansprüche 11 bis 16, dadurch gekennzeichnet, daß es eine geringe Menge einer Base enthält.

18. Dichtmittel nach einem der Ansprüche 11 bis 17, dadurch gekennzeichnet, daß es als Lösungsmittel ein Gemisch aus niedrig siedenden und höher siedenden Anteilen enthält.

19. Dichtmittel nach einem der Ansprüche 11 bis 18, dadurch gekennzeichnet, daß es zusätzlich 10 bis 45 Gew.% Teer enthält.

**Europäisches Patentamt**

# EUROPÄISCHER RECHERCHENBERICHT

## EINSCHLÄGIGE DOKUMENTE

EP 85114793.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | US - A - 3 422 054 (KELLY)<br>* Ansprüche 1,3 *<br>-- | 1,11 | C 09 K 3/18 |
| A | US - A - 3 450 653 (CLELLAN)<br>* Zusammenfassung; Spalte 4, Zeilen 52-57; Spalte 6, Zeilen 3-9 *<br>-- | 1,3,4,<br>11,13,<br>14 | |
| A | EP - A1 - 0 052 301 (BAYER)<br>* Seite 6, Zeile 16 - Seite 7, Zeile 25 *<br>-- | 1,11 | |
| A | GB - A - 1 226 163 (BAYER)<br>* Seite 1; Zeilen 13-62 *<br>-- | 1,11 | |
| A | EP - A1 - 0 010 293 (UNASCO)<br>* Zusammenfassung *<br>-- | 1,2,<br>11,12 | RECHERCHIERTE SACHGEBIETE (Int. Cl.4)<br><br>C 09 K<br>C 04 B |
| A | US - A - 4 063 002 (WILSON)<br>* Spalte 15, Zeile 65 - Spalte 16, Zeile 11 *<br>-- | 1,9,<br>11,19 | |
| A | DD - A - 65 989 (WIEDECK)<br>* Zusammenfassung *<br>---- | 1,10,<br>11 | |

Der vorliegende Recherchenbericht wurde für alle Patentansprüche erstellt.

| Recherchenort | Abschlußdatum der Recherche | Prüfer |
|---|---|---|
| WIEN | 25-03-1986 | WILFLINGER |